Europäisches Patentamt

(19) European Patent Office

Office européen des brevets

(11) Publication number: **0 126 717**
**B1**

(12) **EUROPEAN PATENT SPECIFICATION**

(45) Date of publication of patent specification: **09.03.88**

(21) Application number: **84830151.1**

(22) Date of filing: **18.05.84**

(51) Int. Cl.⁴: **G 05 D 23/19,** G 05 B 19/04, F 24 H 9/20

(54) **A device for the time-programmed control of water heater or of electrical loads in general.**

(30) Priority: **18.05.83 IT 2188783 u**

(43) Date of publication of application: ˙
**28.11.84 Bulletin 84/48**

(45) Publication of the grant of the patent:
**09.03.88 Bulletin 88/10**

(84) Designated Contracting States:
**AT BE CH FR LI**

(56) References cited:
**CH-A- 627 009**
**DE-A-3 102 706**
**DE-B-1 238 531**
**FR-A-2 423 810**
**FR-A-2 500 651**
**GB-A-2 076 236**
**GB-A-2 091 913**
**US-A-4 316 577**
**US-A-4 335 847**

(73) Proprietor: **BASSANI TICINO S.p.A.**
**Corso di Porta Vittoria, 9**
**I-20122 Milano (IT)**

(72) Inventor: **Ballada, Romano**
**Via Pecorini, 16**
**I-20138 Milan (IT)**

(74) Representative: **Perani, Aurelio**
**c/o JACOBACCI-CASETTA & PERANI 7, Via**
**Visconti di Modrone**
**I-20122 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to a control device for controlling a water heater on a time-programmed basis, such that it is cyclically switched on and off automatically throughout the day.

Electric, storage-type water heaters are usually only equipped with a thermostatic control effective for ensuring recovery of calories that have been spent through use of warm water or lost due to leaks or dripping from the plant. This implies that conditions of full availability in warm water have to be maintained at a maximum throughout the day, which is power-consuming to an extent not proportionate to the actual requirements by the user who generally requires warm water only at given times.

Thus, there is a need for a device which permits conditions of maximum stored thermal energy to be reached only when the user actually expects to make use thereof.

There exist, in fact, clock devices for controlling water heaters, which are programmed on preselected times.

However, these are devices considerably high in cost and require the user to effect continued programming operations which are, furthermore, complicated to carry on.

The control device for the time-programmed control of water heaters according to the present invention is remarkably low in cost, it results in a real power-saving, it requires no action by the user once the control device has been programmed, and is sufficiently flexible in operation to allow for a variety of working conditions.

The device according to the present invention, as claimed, is inserted on the main supply to the water heater and is provided with an electric contact arranged upstream of the water heater, and with a three operative positions, control change-over switch, which: in its first operative position, permits said contact to be cyclically switched on and off thus cyclically energizing and deenergizing the water heater; in its second operative position, permits said contact to be held in the position where it is, thus permitting full availability from the water heater or its deenergization; in its third restoring operative position, enables the programmed cycle to be adjusted.

An indicating means is also provided on a front control panel of the device and indicates the cycle as it progresses.

Further features of the control device for the time-programmed control of water heaters will become more apparent from the following description taken in connection with the accompanying drawing which shows, by way of a nonlimiting example, one embodiment of the invention, and in which:

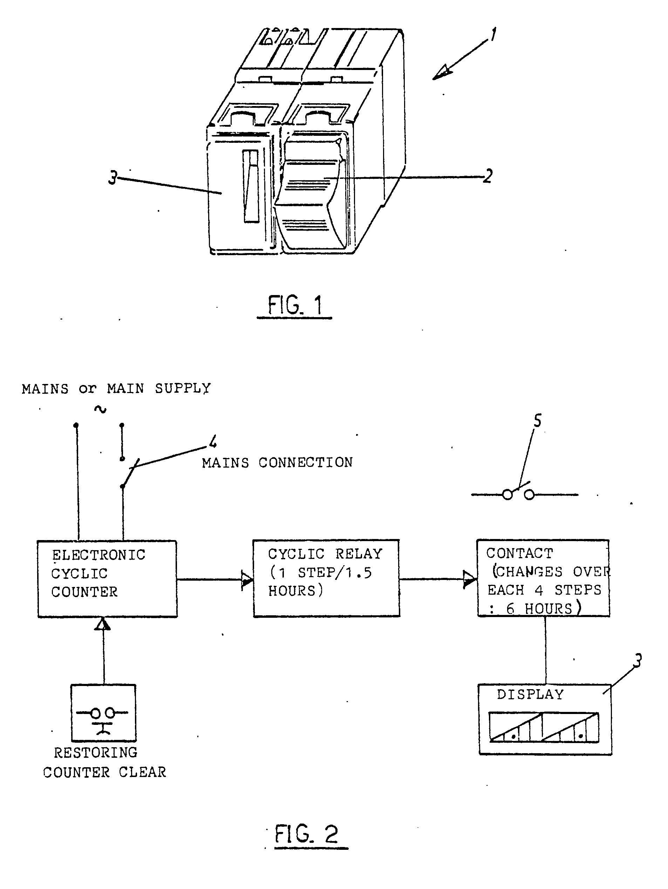

— Figure 1 is a perspective view of the concerned device which shows the indicating means and the three-position change-over switch, and

— Figure 2 is a block diagram showing the operating principle on which the device according to this invention is based. Reference will be made now to Figure 1 where the control device of the invention has been broadly designated by 1. Placed on the front of the control device 1 are a 3-positions change-over switch 2 and an indicator means 3. The three-position change over switch 2 permits achieving the following operations, further explained hereinafter: — switching-on, switching-off, restoring.

To begin with, the changeover switch 2 is supposed as being in its switched-on position, i.e. the position permitting typical cyclic operation of device 1, which operation will be described also with the aid of the block diagram in Figure 2.

The device is connected into the supply main to the water heater through an electric contact 4 (Figure 2) and it operates an electric contact 5 which permits the load to be cyclically switched on and off, for example, every six hours. Thus, the user will be able to, for example, program switching-on at 14 o'clock, such that switching-off will automatically occur at 20, switching-on again at 2, and subsequent switching-off at 8. This cycle will repeat every 24 hours with an actual deenergized condition ensured for 12 hours. Obviously, the above example is by way of illustration only, and the length of the cycle may be varied in a convenient manner.

In order that a good accuracy is attained as to the repeatability of a cycle, the same main voltage is chosen as the basis for the count. Thus, with reference to Figure 2, the "cyclic electronic counter" counts the cycles of the network frequency and remaining in the range of the example above — after 1,5 hours, it sends a driving impulse to a cyclic relay which moves one step forwards. Every four steps, corresponding to six hours, there is produced a changing-over of the load contact 5. The indicator means 3 indicates both the position of the cyclic electronic counter and the steps performed by the cyclic relay. The disconnecting position of changeover switch 2 permits the contact 5 to be held in the position where it is, which may be useful in the cases when the user desires to avail himself of the full efficiency of the water heater.

The instantaneous restoring position of changeover switch 2 (see also Figure 2) permits the cyclic relay to move one step (1,5 h) further, while at the same time resetting the electronic counter, so that, at each restoring action, count starts again to produce a further step after 1,5 h. Adjusting of the cycle is facilitated through indications of indicator means 3.

Power consumption of the device is very low, because of the counting circuit operating on a cyclic relay, which is thus energized for a few milliseconds.

Finally, the control device according to the invention is very small in size, it is one of the modular type, and it may be provided both for wall and flush mounting.

Although a preferred embodiment of the control device for the time-programmed control of water heaters according to the present invention, has been described herein above and shown, by way of a non-restrictive example, in the accompanying drawings, it will be apparent that many changes, as to the details of its construction, may be made thereto by those skilled in the art, without departing from the scope of the present invention.

## Claims

1. A device for the time-programmed control of the energisation and de-energisation of electrical loads, in particular of water heaters, to be connected with the mains via an electric contact (4), whereby a series-connected movable contact (5) is cyclically changed over from a closed to an open position to energise or de-energise the load according to a preprogrammed, time-dependent cycle, characterised in that it comprises a single switch means (2) which has three operative positions and which:
— in its first operative position, permits said series-connected movable contact (5) to be cyclically changed over, thereby cyclically energising or de-energising the water heater according to said preprogrammed, time-dependent cycle;
— in its second operative position, enables said movable contact (5) to be held in the closed or open position it has assumed according to said preprogrammed, time-dependent cycle, thereby ensuring either the permanent energisation or the permanent de-energisation of the water heater; and
— in its third, instantaneous restoring, operative position, permits the said preprogrammed, time-dependent cycle to be adjusted.

2. The device according to claim 1, characterised in that the cyclic changeover of contact (5) is performed by a cyclic relay the step motion of which is operated through a cyclic electronic counter, the counting base of the cyclic electronic counter being the mains frequency.

3. The device according to claims 1 and 2, characterised in that an indicator means (3) is provided which is effective for indicating the state of the cyclic electronic counter and the number of steps performed by the cyclic relay.

## Patentansprüche

1. Vorrichtung für die zeitprogammierte Steuerung der Erregung und Aberregung von elektrischen Verbrauchern, insbesondere von Wassererhitzern, die mit dem Netz über einen elektrischen Kontakt (4) zu verbinden sind, wodurch ein in Serie geschalteter beweglicher Kontakt (5) zyklisch zwischen einer geschlossenen und einer offenen Stellung umgeschaltet wird, um den Verbraucher entsprechend einem vorprogrammierten, zeitabhängigen Zyklus zu erregen oder abzuerregen, dadurch gekennzeichnet, daß sie eine einzige Schalteinrichtung (2) enthält, die drei Detriebsstellungen aufweist und die:
— in ihrer ersten Betriebsstellung ermöglicht, daß der in Serie geschaltete bewegliche Kontakt (5) zyklisch umgeschaltet wird, um dadurch zyklisch den Wasserheizer entsprechend dem genannten vorprogrammierten, zeitabhängigen Zyklus zu erregen oder abzuerregen;
— in ihrer zweiten Betriebsstellung ermöglicht, daß der bewegliche Kontakt (5) in der geschlossenen oder offenen Stellung gehalten wird, die er entsprechend dem vorprogrammierten, zeitabhängigen Zyklus eingenommen hat, um dadurch entweder die ständige Erregung oder die ständige Aberregung des Wasserheizers sicherzustellen; und
— in ihrer dritten, augenblicklichen wiederherstellenden Betriebsstellung ermöglicht, daß der genannte vorprogrammierte, zeitabhängige Zyklus eingestellt wird.

2. Vorrichtung nach Anspruch 1, dadurch gekennzeichnet, daß das zyklische Umschalten des Kontaktes (5) von einem zyklischen Relais ausgeführt wird, dessen Schrittbewegung durch einen zyklischen elektronischen Zähler gesteuert wird, wobei die Zählbasis des zyklischen elektronischen Zählers die Netzfrequenz ist.

3. Vorrichtung nach den Ansprüchen 1 und 2, dadurch gekennzeichnet, daß eine Anzeigeeinrichtung (3) vorgesehen ist, die dazu wirksam ist, den Zustand des zyklischen elektronischen Zählers und die Anzahl der von dem zyklischen Relais ausgeführten Schritte anzuzeigen.

## Revendications

1. Dispositif pour la commande, programmée dans le temps, de l'excitation et de la désexcitation de charges électriques, en particulier, des chauffe-eau, devant être connectées avec le réseau électrique par l'intermédiaire d'un contact électrique (4), de sorte qu'un contact mobile connecté en série (5) commute cycliquement d'une position fermée à une position ouverte afin d'exciter ou de désexciter la charge en fonction d'un cycle dépendant du temps préprogrammé, caractérisé en ce qu'il comprend un unique moyen de commutation (2) qui possède trois positions actives et qui:
— dans sa première position active, permet de faire cycliquement commuter ledit contact mobile connecté en série (5), ce qui permet d'exciter ou de désexciter cycliquement le chauffe-eau en fonction dudit cycle dépendant du temps préprogrammé;
— dans sa deuxième position active, permet de maintenir ledit contact mobile (5) dans la position fermée ou ouverte qu'il a prise en fonction dudit cycle dépendant du temps préprogrammé, ce qui permet d'assurer l'excitation permanente ou la désexcitation permanente du chauffe-eau; et
— dans sa troisième position active, de rétablissement instantané, permet de régler ledit cycle dépendant du temps préprogrammé.

2. Dispositif selon la revendication 1, caractérisé en ce que la commutation cyclique du contact (5) est effectuée par un relais cyclique dont le mouvement pas à pas est effectué par l'intermédiaire d'un compteur électronique cyclique, la base de comptage du compteur électronique cyclique étant la fréquence du réseau électrique.

3. Dispositif selon les revendications 1 et 2, caractérisé en ce qu'il est prévu un moyen indicateur (3) qui a pour effet d'indiquer l'état du compteur électronique cyclique et le nombre de pas effectués par le relais cyclique.

**0 126 717**

FIG. 1

MAINS or MAIN SUPPLY

MAINS CONNECTION

| ELECTRONIC CYCLIC COUNTER | CYCLIC RELAY (1 STEP/1.5 HOURS) | CONTACT (CHANGES OVER EACH 4 STEPS : 6 HOURS) |

RESTORING COUNTER CLEAR

DISPLAY

FIG. 2

1